# EUROPEAN PATENT SPECIFICATION

(11) **EP 4 075 814 B1**
(45) Date of publication and mention of the grant of the patent: **06.05.2026**
(21) Application number: 20902724.2
(22) Date of filing: 17.12.2020
(51) Int. Cl.: H04N 21/239, H04N 21/232, H04N 21/235

(54) **MP4 FILE VIRTUAL MSS FRAGMENTATION METHOD, MSS ADAPTER, MEDIA SERVER, AND STORAGE MEDIUM**
VIRTUELLES MSS-FRAGMENTIERUNGSVERFAHREN FÜR MP4-DATEI, MSS-ADAPTER, MEDIENSERVER UND SPEICHERMEDIUM
PROCÉDÉ DE FRAGMENTATION DE MSS VIRTUELLE DE FICHIER MP4, ADAPTATEUR DE MSS, SERVEUR MULTIMÉDIA ET SUPPORT DE STOCKAGE

(30) Priority: 19.12.2019 CN 201911315661
(43) Date of publication of application: 19.10.2022
(73) Proprietor: ZTE Corporation, Shenzhen, Guangdong 518057 (CN)
(72) Inventor: XU, Jing, Shenzhen, Guangdong 518057 (CN); BAI, Yaxian, Shenzhen, Guangdong 518057 (CN)
(74) Representative: WBH Wachenhausen Patentanwälte PartG mbB
(86) International application number: PCT/CN2020/137122
(87) International publication number: WO 2021/121303

(56) References cited:
- CN-A- 108 271 048
- CN-A- 109 274 696
- CN-A- 109 787 983
- CN-A- 110 198 494
- US-A1- 2015 156 240
- US-A1- 2017 111 665
- US-A1- 2018 300 325
- US-B1- 10 432 690
- ALEX ZAMBELLI: "Smooth Streaming Architecture", ALEX ZAMBELLI'S STREAMING MEDIA BLOG, 10 February 2009 (2009-02-10), XP055659385, Retrieved from the Internet <URL:http://alexzambelli.com/blog/2009/02/10/smooth-streaming-architecture/> [retrieved on 20200120]
- SAFIQUL ISLAM: "A HTTP Streaming Video Server with Dynamic Advertisement Splicing", KTH INFORMATIONAND COMMUNICATION TECHNOLOGY, 21 March 2010 (2010-03-21), XP055173803
- KIM TAE-KOOK ET AL: "Categorization-based video streaming for traffic mitigation in content delivery services", MULTIMEDIA TOOLS AND APPLICATIONS, KLUWER ACADEMIC PUBLISHERS, BOSTON, US, vol. 76, no. 23, 24 May 2017 (2017-05-24), pages 25495 - 25510, XP036380514, ISSN: 1380-7501, [retrieved on 20170524], DOI: 10.1007/S11042-017-4770-2

## Description

### TECHNICAL FIELD

The present disclosure relates to multimedia services, in particular to a virtual Microsoft Smooth Streaming (MSS) chunking method for an MP4 file, an MSS adapter, a media server and a computer-readable storage medium.

### BACKGROUND

Moving Picture Experts Group 4 Part 14 (MPEG-4 Part 14 or MP4) is a common multimedia file format, which is widely used in various terminal devices. MP4 files can be used as storage containers for various video files, and stored in terminal devices or network servers. Various MP4 files can be played on demand by using MP4 players in terminal devices.

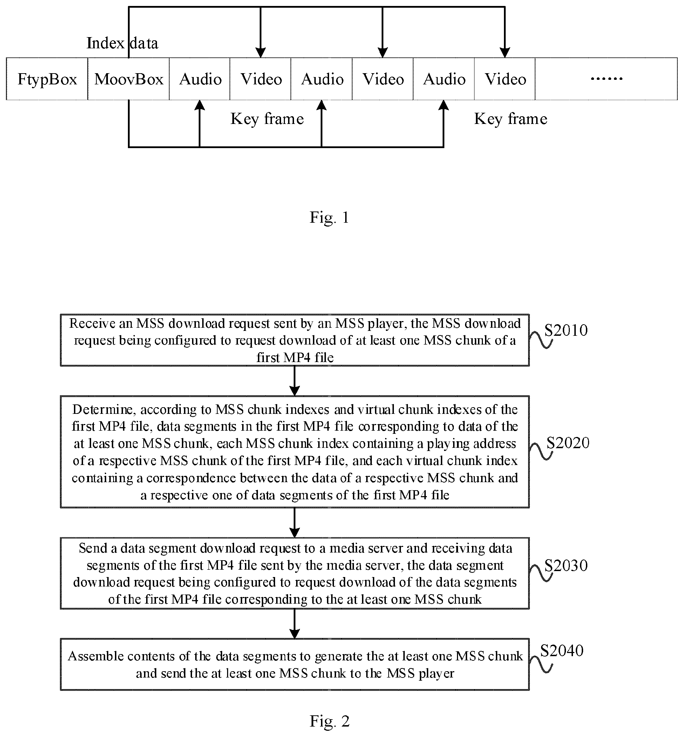

Fig. 1 is a schematic diagram of a common MP4 file. As shown in Fig. 1, a head of the MP4 file includes two containers, FtypBox and MoovBox, where FtypBox is used for storing an encoding format, standard, etc. used by the MP4 file, and MoovBox (i.e., a movie box) records key data such as decoding information, timestamps and positions of all subsequent audio frames and video frames, which can also be referred to as index data of the MP4 file, especially related information of key frames among the video frames. Among the video frames, the key frames are the most important nodes, and a player refreshes the whole image at the key frames. However, at present, all the index information of the MP4 file is stored in the MoovBox. The larger the file size, the larger the MoovBox. The player needs to obtain and parse the index information in the MoovBox before playing the MP4 file. The larger the MoovBox, the longer the time for the player to load data in the MoovBox, and the longer the buffer time for file playing.

In order to shorten the buffer time for MP4 file playing, the MSS protocol is becoming more and more popular. In the MSS protocol, a large MP4 file is converted into many small media file chunks which can be loaded fast, so that the problem of long buffer time for MP4 file playing can be solved. However, many small-size media file chunks are just like tiny file fragments, which are difficult to manage and affect the performance of the server where the files are stored. Therefore, it's important to improve the management of MP4 files for streaming media.

US 2017/111665 A1 relates to delivery online of high definition (HD) video at broadcast audience scale to popular runtime environments and mobile devices.

Alex Zambelli: "Smooth Streaming Architecture", Alex Zambelli's Streaming Media Blog, 10 February 2009 (2009-02-10), XP055659385, relates to how Smooth Streaming works: format, server, and client.

"A HTTP Streaming Video Server with Dynamic Advertisement Splicing", 21 March 2010 (2010-03-21), XP055173803, relates to how to implement a streaming server that will fetch streaming contents and advertisements from their respective content servers and to cleverly stitch the advertisements into the media stream before feeding the stream to a client.

### SUMMARY

The invention is set out in the appended set of claims.

Embodiments of the present disclosure provide a virtual MSS chunking method for an MP4 file, an MSS adapter, a media server and a computer-readable storage medium.

In accordance with an aspect of the present disclosure, an embodiment provides a virtual MSS chunking method for an MP4 file, including: receiving an MSS download request sent by an MSS player, the MSS download request being configured to request download of at least one MSS chunk of a first MP4 file; determining, according to MSS chunk indexes and virtual chunk indexes of the first MP4 file, data segments in the first MP4 file corresponding to data of the at least one MSS chunk, each MSS chunk index containing a playing address of a respective MSS chunk of the first MP4 file, and each virtual chunk index containing a correspondence between the data of a respective MSS chunk and a respective one of data segments of the first MP4 file; sending a data segment download request to a media server and receiving data segments of the first MP4 file sent by the media server, the data segment download request being configured to request download of the data segments of the first MP4 file corresponding to the at least one MSS chunk; and assembling the data segments to generate the at least one MSS chunk and sending the at least one MSS chunk to the MSS player.

In accordance with an aspect of the present disclosure, an embodiment provides a virtual MSS chunking method for an MP4 file, including: receiving a data segment download request sent by an MSS adapter, the data segment download request being configured to request download of data segments of a first MP4 file corresponding to at least one MSS chunk; and sending data segments of the first MP4 file to the MSS adapter.

In accordance with an aspect of the present disclosure, an embodiment provides an MSS adapter, including a processor and a memory, where the processor is configured to execute program instructions stored in the memory to implement the virtual MSS chunking method for a MP4 file as mentioned above.

In accordance with an aspect of the present disclosure, an embodiment provides a media server, including a processor and a memory, where the processor is configured to execute program instructions stored in the memory to implement the virtual MSS chunking method for a MP4 file as mentioned above.

In accordance with an aspect of the present disclosure, an embodiment provides a computer-readable storage medium storing a computer program which, when executed by a processor, cause the processor to implement the virtual MSS chunking method for a MP4 file as mentioned above.

### BRIEF DESCRIPTION OF DRAWINGS

Fig. 1 is a schematic diagram of a common MP4 file;
Fig. 2 is a flowchart of a virtual MSS chunking method for an MP4 file provided by an embodiment;
Fig. 3 is a schematic diagram of virtual chunking for an MP4 file;
Fig. 4 is a schematic diagram of virtual chunking for an MP4 file;
Fig. 5 is a flowchart of another virtual MSS chunking method for an MP4 file provided by an embodiment;
Fig. 6 is a flowchart of another virtual MSS chunking method for an MP4 file provided by an embodiment;
Fig. 7 is a flowchart of another virtual MSS chunking method for an MP4 file provided by an embodiment;
Fig. 8 is an interactive flowchart of another virtual MSS chunking method for an MP4 file provided by an embodiment;
Fig. 9 is a schematic diagram of a virtual MSS chunking apparatus for an MP4 file provided by an embodiment;
Fig. 10 is a schematic diagram of a virtual MSS chunking apparatus for an MP4 file provided by an embodiment;
Fig. 11 is a schematic diagram of an MSS adapter provided by an embodiment;
Fig. 12 is a schematic diagram of a media server provided by an embodiment of the present disclosure; and
Fig. 13 is a schematic diagram of an MSS chunking system for an MP4 file provided by an embodiment.

### DETAILED DESCRIPTION

The embodiments of the present disclosure will be described in detail below with reference to the accompanying drawings.

An MP4 file is the most common multimedia file format. The structure of the MP4 file is shown in Fig. 1. Ahead of the MP4 file includes two containers, FtypBox and MoovBox, where FtypBox is used for storing an encoding format, standard, etc. used by the MP4 file, and MoovBox (movie box) records key data such as decoding information, timestamps and positions of all subsequent audio frames and video frames, which can also be referred to as index data of the MP4 file, especially related information of key frames among the video frames. After the MoovBox container, data of each audio frame and each video frame are stored, and each audio frame corresponds to one video frame. After a player acquires an MP4 file, information such as an encoding format is determined according to what is recorded in FtypBox, and then information such as positions and timestamps of each audio frame and each video frame is determined according to what is recorded in MoovBox, so as to decode each audio frame and each video frame in turn, and then play the MP4 file. Alignment is needed during playing according to the timestamp information of each audio frame and each video frame. Some frames among the video frames are key frames, and the player refreshes a whole image at the key frames, so the key frames can be considered as starting points of image decoding.

When the size of the MP4 file is large, the number of the video frames and the audio frames is also large, so a large volume of index data need to be stored in MoovBox, which leads to a long buffer time for MP4 file playing because the player needs to read the index data in MoovBox before playing the MP4 file. In order to shorten the buffer time for MP4 file playing, the MSS protocol is currently used for chunking the MP4 file. According to the MSS protocol, a large number of audio frames and video frames in the MP4 file are segmented, the whole MP4 file is converted into several smaller media file chunks, and each file chunk contains data of one or more video frames and audio frames. In this way, a loading speed of each small media file chunk is fast, which solves the problem of long buffer time for MP4 file playing. However, many small-size media file chunks are just like tiny file fragments, which are difficult to manage and affect the performance of the server where the files are stored. An embodiment of the present disclosure provides a virtual MSS chunking method for an MP4 file to solve the above problem.

Fig. 2 is a flowchart of a virtual MSS chunking method for an MP4 file provided by an embodiment. As shown in Fig. 2, the method provided by this embodiment includes the following steps.

At step S2010, an MSS download request sent by an MSS player is received, where the MSS download request is configured to request download of at least one MSS chunk of a first MP4 file.

The virtual MSS chunking method for a MP4 file provided by this embodiment is applied to an MSS adapter, which is a device or module for converting between MP4 files and MSS files. The MSS adapter can be an independent device, or can be arranged in a terminal device that plays MP4 files, or can be arranged in a media server that stores MP4 files. Storing MP4 files in the media server will lead to a long buffer time when large-size MP4 files are played on a terminal device, while storing MSS chunks obtained after segmenting the MP4 files according to the MSS protocol in the media server will affect the performance of the media server as too many fragmented files are stored in the media server.

Therefore, in this embodiment, the MSS adapter is configured separately, and the MSS adapter is used for converting between MP4 files and MSS chunks, so that the media server only needs to store the complete MP4 file, instead of storing the MSS chunks obtained after segmenting the MP4 file. In the terminal device, a player based on the MSS protocol can be used for playing, thus reducing the long buffer time required for playing MP4 files. In order to realize the above-mentioned functions of the MSS adapter, the MP4 file is virtualized as MSS chunks in the MSS adapter, that is, virtual MSS chunks are established in the MSS adapter, a correspondence between the virtual MSS chunks and the MP4 file is established, and the virtual MSS chunks are provided to an MSS player in the terminal device. When the MSS player needs to play the MSS chunks, the MSS adapter determines a correspondence between an MSS chunk to be played and audio frames and video frames in the MP4 file stored in the media player, downloads corresponding audio frame and video frame data from the media player, and assembles the data to obtain the MSS chunk, so that the MSS chunk requested by the MSS player can be provided to the MSS player for playing.

First, when the MSS player needs to play the MSS chunk, the MSS adapter receives an MSS download request sent by the MSS player. The MSS download request is configured to request download of at least one MSS chunk of a first MP4 file. The MSS download request is sent by the MSS player according to an MSS chunk index of the first MP4 file. Each MSS chunk index of the first MP4 file contains a playing address of a respective MSS chunk of the first MP4 file. After determining the MSS chunk to be played according to the MSS chunk index, the MSS player sends the MSS download request to the MSS adapter. Each MSS chunk contains data of at least one video frame and a corresponding audio frame. In order to ensure the normal play of the MSS chunks, each MSS chunk should contain at least one key video frame, and the key video frame should be a first video frame of the MSS chunk.

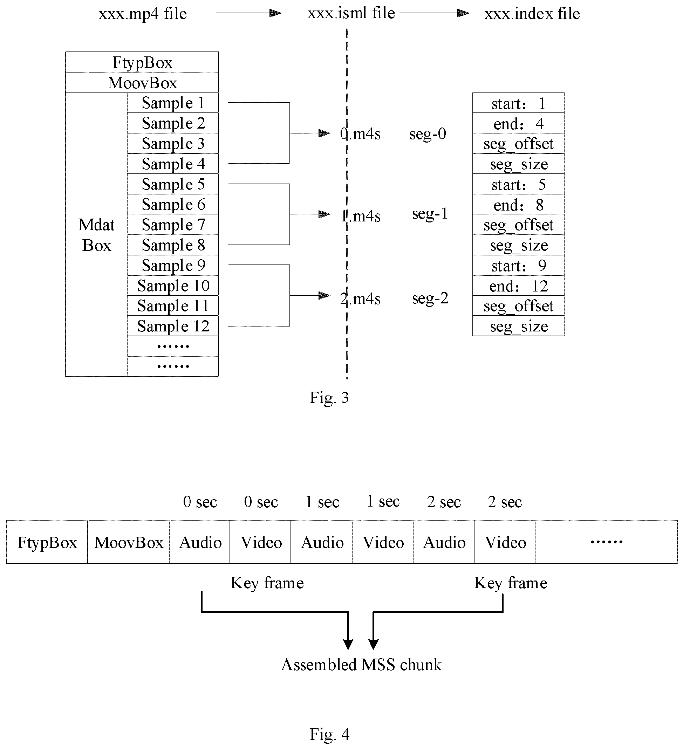

Fig. 3 is a schematic diagram of virtual chunking for an MP4 file. As shown in Fig. 3, xxx.mp4 is an MP4 file stored in a media player, and a data structure of the xxx.mp4 file is shown in the figure, in which a header of the file includes a FtypBox container and a MoovBox container, and an MdatBox container is used for storing audio frame and video frame data of the MP4 file. First, the MoovBox container in the xxx.mp4 file is parsed, and information of audio frame and video frame indexes and key video frames in the xxx.mp4 file is acquired. Sample 1-Sample n represent n combinations of audio frames and video frames with same timestamps, each sample contains a video frame and an audio frame with a same timestamp, and Sample 4, Sample 8 and Sample 12 contains key video frames. By taking the key video frames as boundaries, the data in the xxx.mp4 file are virtually segmented. The video frame and audio frame data in multiple samples are considered as one data segment, and multiple m4s chunks are generated. Each m4s chunk records address information of multiple video frames and audio frames in one data segment. Multiple m4s chunks constitute an xxx.isml file, and the xxx.isml file is the MSS chunk index of the MP4 file. Then, according to a correspondence between each m4s chunk in the xxx.isml file and a respective data segment of the MP4 file, an xxx.index file, that is, a virtual chunk index of the MP4 file, is generated. In the xxx.index file, a corresponding piece of address information is recorded for each data segment in the MP4 file, and seg-0 - seg-n represent actual position information in the MP4 file corresponding to each data segment. For example, information recorded in seg-0 is a start frame number (start), an end frame number (end), a start frame position (seg_offset) and a length of the data segment (seg_size) in the MP4 file. In Fig. 3, 1 in the (start) field of seg-0 indicates that a start frame is Sample 1, 4 in the (end) field indicates that an end frame is Sample 4, information in the (seg_offset) field, 13781 for example, indicates that a start position of seg-0 is the 13781st byte of the xxx.mp4 file, and information in the (seg_size) field, 4000 for example, indicates that a length of seg-0 is 4000 bytes. 5 in the (start) field of seg-1 indicates that a start frame is Sample 5, 8 in the (end) field indicates that an end frame is Sample 8, information in the (seg_offset) field, 17781 for example, indicates that a start position of seg-1 is the 17781st byte of the xxx.mp4 file, and information in the (seg_size) field, 4200 for example, indicates that a length of seg-1 is 4200 bytes.

At step S2020, data segments in the first MP4 file corresponding to data of the at least one MSS chunk are determined according to MSS chunk indexes and virtual chunk indexes of the first MP4 file, each MSS chunk index containing a playing address of a respective MSS chunk of the first MP4 file, and each virtual chunk index containing a correspondence between the data of a respective MSS chunk and a respective one of data segments of the first MP4 file.

The MSS chunk indexes of the first MP4 file and the virtual chunk indexes of the first MP4 file are stored in the MSS adapter. Herein, each MSS chunk index contains a playing address of a respective MSS chunk of the first MP4 file, and each virtual chunk index contains a correspondence between the data of a respective MSS chunk and a respective one of data segments of the first MP4 file. That is, the MSS adapter stores the MSS chunk indexes to be provided to the MSS player, which is the same as index files provided to the MSS player when the MSS chunks are stored in the media server, so the MSS player does not need additional upgrade or change. The virtual chunk index stored in the MSS adapter is an index file used for indicating the correspondence between the data of each MSS chunk index and the data in the first MP4 file. Because the MP4 file in the media server is not actually segmented, but only such index file as the virtual chunk index is used for establishing the correspondence with the MSS index file, the MP4 file stored in the media server does not need to be segmented, and the complete MP4 file can still be stored in the media server, thus avoiding the influence of excessive file fragments stored in the media server on the working efficiency of the media server. The virtual chunk index contains the correspondence between the audio frame and video frame data of each MSS chunk and the audio frame and video frame data in the first MP4 file. Through the virtual chunk indexes, positions of each audio frame and each video frame in the MSS chunk requested to be downloaded in the MSS download request sent by the MSS player in the first MP4 file can be determined. Then the MSS adapter can determine, according to the MSS chunk indexes and the virtual chunk indexes of the first MP4 file, data segments in the first MP4 file corresponding to data of the at least one MSS chunk.

In an embodiment, determining, according to MSS chunk indexes and virtual chunk indexes of the first MP4 file, data segments in the first MP4 file corresponding to data of the at least one MSS chunk includes: according to a virtual chunk index corresponding to an index of the at least one MSS chunk, calculating an actual data position range of the data of the at least one MSS chunk in the first MP4 file.

When segmenting the MP4 file, the data in the MP4 file are segmented according to timestamps of the video frames and the audio frames in the MP4 file, as shown in Fig. 4 which is a schematic diagram of virtual chunking for an MP4 file. In Fig. 4, for example, the audio frames and video frames from the 0^{th} second to the 2^{nd} second are taken as one data segment, and a correspondence between the data segment and an MSS chunk is established. Then the MSS adapter can calculate the actual data position range of the data of the at least one MSS chunk in the first MP4 file according to the virtual chunk index corresponding to the MSS chunk index of the at least one MSS chunk, so as to determine the audio frames and the video frames corresponding to the MSS chunk that the MSS player needs to download.

At step S2030, a data segment download request is sent to a media server, and data segments of the first MP4 file sent by the media server are received, where the data segment download request is configured to request download of the data segments of the first MP4 file corresponding to the at least one MSS chunk.

After determining the data segments corresponding to the data of at least one MSS chunk in the first MP4 file, the MSS adapter can send the data segment download request to the media server to request download of the data segments of the first MP4 file corresponding to the at least one MSS chunk. The data segment download request contains address information of each data segment to be downloaded in the first MP4 file. Each data segment contains at least one video frame and a corresponding audio frame.

After receiving the data segment download request, the media server determines positions of video frame and audio frame data in the data segments to be downloaded in the first MP4 file, and then assemblies the video frames and audio frames of each data segment requested to be downloaded into each data segment and sends them to the MSS adapter.

At step S2040, contents of the data segments are assembled to generate the at least one MSS chunk, and the at least one MSS chunk is sent to the MSS player.

After receiving the data segments sent by the media server, the MSS adapter needs to reassemble the video frame and audio frame data in each data segment into a data format conforming to the MSS protocol, that is, assemble the contents of the data segments to generate the at least one MSS chunk. Only in this way can the MSS chunks requested by the MSS player be sent to the MSS player, so that the MSS player can play the MSS chunks normally.

The virtual MSS chunking method for a MP4 file provided by the embodiment of the present disclosure is applied to the MSS adapter. Firstly, the MSS download request sent by the MSS player is received, and the MSS download request is configured to request download of at least one MSS chunk of the first MP4 file. Then, data segments in the first MP4 file corresponding to data of the at least one MSS chunk are determined according to the MSS chunk indexes and virtual chunk indexes of the first MP4 file, each MSS chunk index containing a playing address of a respective MSS chunk of the first MP4 file, and each virtual chunk index containing a correspondence between the data of a respective MSS chunk and a respective one of data segments of the first MP4 file. The data segments of the first MP4 file sent by the media server are received after the data segment download request is sent to the media server, where the data segment download request is configured to request download of the data segments of the first MP4 file corresponding to the at least one MSS chunk. Then, contents of the data segments can be assembled to generate the at least one MSS chunk, and the at least one MSS chunk can be sent to the MSS player. In this way, the MSS player arranged in a terminal device can directly play MSS chunks specified by the MSS protocol without upgrading or changing, and the media server where the MP4 files are stored does not need to store a large number of MSS chunks, so that the influence of storing a large number of file fragments in the media server on its performance is avoided while reducing the buffer time for playback of the MP4 file.

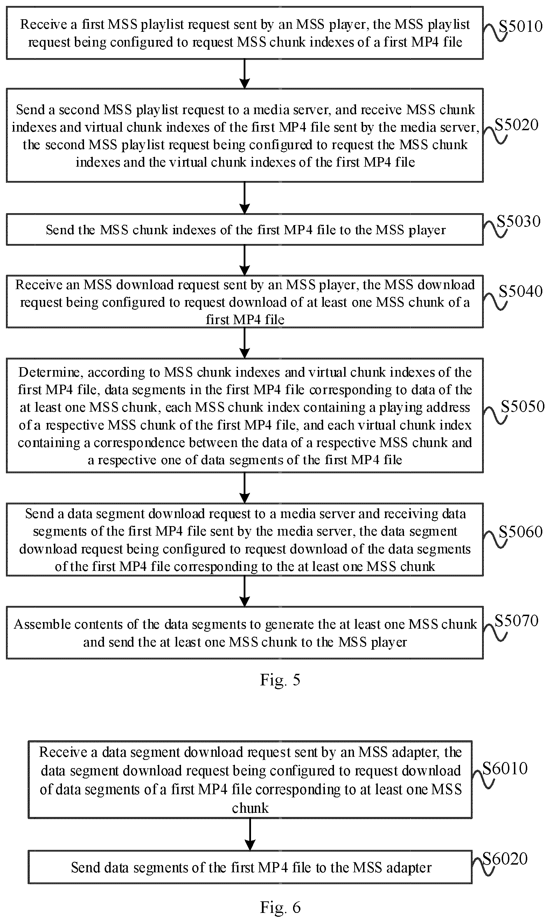

Fig. 5 is a flowchart of another virtual MSS chunking method for an MP4 file provided by an embodiment. As shown in Fig. 5, the method provided by this embodiment includes the following steps.

At S5010, a first MSS playlist request sent by an MSS player is received, where the MSS playlist request is configured to request MSS chunk indexes of a first MP4 file.

In order to play MSS chunks of the first MP4 file, the MSS player in a terminal device first needs to acquire a first MSS chunk index of the first MP4 file, that is, a playing address of each MSS chunk in the first MP4 file. The MSS chunk indexes are index files required by the MSS player to play the MSS chunks conforming to the MSS protocol. Then, when the MSS player needs to play the MSS chunks of the first MP4 file, it first needs to send the first MSS playlist request to the MSS adapter, and the MSS adapter receives the first MSS playlist request sent by the MSS player, where the MSS playlist request is configured to request the MSS chunk indexes of the first MP4 file.

At S5020, a second MSS playlist request is sent to a media server, and the MSS chunk indexes and virtual chunk indexes of the first MP4 file sent by the media server are received, where the second MSS playlist request is configured to request the MSS chunk indexes and the virtual chunk indexes of the first MP4 file.

Since the MSS adapter does not store actual media files, which are MP4 files stored in the media server, the MSS adapter needs to send the second MSS playlist request to the media server after the MSS player sends the first MSS playlist request to the MSS adapter. The second MSS playlist request is configured to request the MSS chunk indexes and the virtual chunk indexes of the first MP4 file. In order to enable the first MP4 file stored therein to be played by the MSS player of the terminal device, the media server needs to segment video frames and audio frames in the first MP4 file on the basis of storing the first MP4 file to obtain a plurality of data segments, and each data segment contains at least one video frame and a corresponding audio frame. Corresponding relationships between data in each data segment and MSS chunk data are established, that is, the virtual chunk indexes of the first MP4 file. In the media server, instead of segmenting the first MP4 file into a plurality of actual data segments, the first MP4 file is virtually segmented and the virtual chunk indexes are established. In addition, the media server also establishes the MSS chunk indexes of the first MP4 file, and each MSS chunk index of the first MP4 file contains a playing address of a respective MSS chunk of the first MP4 file. The purpose of the MSS adapter sending the second MSS playlist request to the media server is to obtain the MSS chunk indexes and the virtual chunk indexes of the first MP4 file stored in the media server.

At S5030, the MSS chunk indexes of the first MP4 file are sent to the MSS player.

After receiving the MSS chunk indexes and the virtual chunk indexes of the first MP4 file sent by the media server, the MSS adapter stores the virtual chunk indexes and the MSS chunk indexes of the first MP4 file and sends the MSS chunk indexes of the first MP4 file to the MSS player. In this way, the MSS player in the terminal device can obtain the MSS chunk indexes conforming to the MSS protocol, and the MSS player can download and play an MSS chunk to be played according to the obtained MSS chunk indexes. The MSS adapter stores the virtual chunk indexes and the MSS chunk indexes of the first MP4 file. After the playback request sent by the MSS player is received, positions of the MSS chunks that the MSS player requests to play in the first MP4 file can be determined by querying the virtual chunk indexes of the first MP4 file, and then the media server that stores the first MP4 file is requested to download corresponding video frames and audio frames in the first MP4 file, which are then assembled into the MSS chunk in the MSS adapter and sent to the MSS player, so as to realize the normal playing of the MSS player.

At S5040, an MSS download request sent by the MSS player is received, where the MSS download request is configured to request download of at least one MSS chunk of the first MP4 file.

After the MSS player obtains the MSS chunk indexes of the first MP4 file, and the MSS chunk indexes and the virtual chunk indexes of the first MP4 file are stored in the MSS adapter, the MSS player can play the MSS chunks, that is, perform steps S5050-S5100. Steps S5050-S5100 are performed in the same way as steps S2010-S2060, so they will not be repeated here.

At S5050, data segments in the first MP4 file corresponding to data of the at least one MSS chunk are determined according to MSS chunk indexes and virtual chunk indexes of the first MP4 file, each MSS chunk index containing a playing address of a respective MSS chunk of the first MP4 file, and each virtual chunk index containing a correspondence between the data of a respective MSS chunk and a respective one of data segments of the first MP4 file.

At S5060, a data segment download request is sent to a media server, and data segments of the first MP4 file sent by the media server are received, where the data segment download request is configured to request download of the data segments of the first MP4 file corresponding to the at least one MSS chunk.

At S5070, contents of the data segments are assembled to generate the at least one MSS chunk, and the at least one MSS chunk is sent to the MSS player.

Fig. 6 is a flowchart of another virtual MSS chunking method for an MP4 file provided by an embodiment. As shown in Fig. 6, the method provided by this embodiment includes the following steps.

At S6010, a data segment download request sent by an MSS adapter is received, where the data segment download request is configured to request download of data segments of a first MP4 file corresponding to at least one MSS chunk.

The virtual MSS chunking method for a MP4 file provided in this embodiment is applied to a media server, which is a server for storing media files, and can be located in the cloud or local to users. Storing MP4 files in the media server will lead to a long buffer time when large-size MP4 files are played on a terminal device, while storing MSS chunks obtained after segmenting the MP4 files according to the MSS protocol in the media server will affect the performance of the media server as too many fragmented files are stored in the media server.

Therefore, in this embodiment, the MSS adapter is configured, which is a device or module for converting between MP4 files and MSS files. The MSS adapter can be an independent device, or can be arranged in a terminal device that plays MP4 files, or can be arranged in a media server that stores MP4 files. Therefore, the media server only needs to store the complete MP4 file, instead of storing the MSS chunks obtained after segmenting the MP4 file. In the terminal device, a player based on the MSS protocol can be used for playing, thus reducing the long buffer time required for playing MP4 files. In order to realize the above-mentioned functions of the MSS adapter, the MP4 file is virtualized as MSS chunks in the MSS adapter, that is, virtual MSS chunks are established in the MSS adapter, a correspondence between the virtual MSS chunks and the MP4 file is established, and the virtual MSS chunks are provided to an MSS player in the terminal device. When the MSS player needs to play the MSS chunks, the MSS adapter determines a correspondence between an MSS chunk to be played and audio frames and video frames in the MP4 file stored in the media player, downloads corresponding audio frame and video frame data from the media player, and assembles the data to obtain the MSS chunk, so that the MSS chunk requested by the MSS player can be provided to the MSS player for playing.

First, when the MSS player needs to play the MSS chunk, the MSS adapter receives an MSS download request sent by the MSS player. The MSS download request is configured to request download of at least one MSS chunk of a first MP4 file. The MSS download request is sent by the MSS player according to an MSS chunk index of the first MP4 file. Each MSS chunk index of the first MP4 file contains a playing address of a respective MSS chunk of the first MP4 file. After determining the MSS chunk to be played according to the MSS chunk index, the MSS player sends the MSS download request to the MSS adapter. Each MSS chunk contains data of at least one video frame and a corresponding audio frame. In order to ensure the normal play of the MSS chunks, each MSS chunk should contain at least one key video frame, and the key video frame should be a first video frame of the MSS chunk.

The media server receives the data segment download request sent by the MSS adapter, where the data segment download request is configured to request download of the data segments of the first MP4 file corresponding to the at least one MSS chunk. The data segment download request sent by the MSS adapter is sent after the MSS adapter determines, according to the MSS chunk indexes and the virtual chunk indexes of the first MP4 file, the data segments in the first MP4 file corresponding to the data of the at least one MSS chunk. The MSS chunk indexes of the first MP4 file and the virtual chunk indexes of the first MP4 file are stored in the MSS adapter. Herein, each MSS chunk index contains a playing address of a respective MSS chunk of the first MP4 file, and each virtual chunk index contains a correspondence between the data of a respective MSS chunk and a respective one of data segments of the first MP4 file. That is, the MSS adapter stores the MSS chunk indexes to be provided to the MSS player, which is the same as index files provided to the MSS player when the MSS chunks are stored in the media server, so the MSS player does not need additional upgrade or change. The virtual chunk index stored in the MSS adapter is an index file used for indicating the correspondence between the data of each MSS chunk index and the data in the first MP4 file. Because the MP4 file in the media server is not actually segmented, but only such index file as the virtual chunk index is used for establishing the correspondence with the MSS index file, the MP4 file stored in the media server does not need to be segmented, and the complete MP4 file can still be stored in the media server, thus avoiding the influence of excessive file fragments stored in the media server on the working efficiency of the media server. The virtual chunk index contains the correspondence between the audio frame and video frame data of each MSS chunk and the audio frame and video frame data in the first MP4 file. Through the virtual chunk indexes, positions of each audio frame and each video frame in the MSS chunk requested to be downloaded in the MSS download request sent by the MSS player in the first MP4 file can be determined. Then the MSS adapter can determine, according to the MSS chunk indexes and the virtual chunk indexes of the first MP4 file, data segments in the first MP4 file corresponding to data of the at least one MSS chunk.

At S6020, data segments of the first MP4 file are sent to the MSS adapter.

After receiving the data segment download request, the media server determines positions of video frame and audio frame data in the data segments to be downloaded in the first MP4 file, and then assemblies the video frames and audio frames of each data segment requested to be downloaded into each data segment and sends them to the MSS adapter. After receiving the data segments sent by the media server, the MSS adapter needs to reassemble the video frame and audio frame data in each data segment into a data format conforming to the MSS protocol, that is, assemble contents of the data segments to generate the at least one MSS chunk. Only in this way can the MSS chunks requested by the MSS player be sent to the MSS player, so that the MSS player can play the MSS chunks normally.

The virtual MSS chunking method for a MP4 file provided by the embodiment of the present disclosure is applied to the media server. Firstly, the data segment download request sent by the MSS adapter is received, and the data segment download request is configured to request download of the data segments of the first MP4 file corresponding to the at least one MSS chunk. Then, the data segments of the first MP4 file are sent to the MSS adapter, the contents of the data segments are then assembled to generate the at least one MSS chunk, and the at least one MSS chunk is sent to the MSS player. In this way, the MSS player arranged in a terminal device can directly play MSS chunks specified by the MSS protocol without upgrading or changing, and the media server where the MP4 files are stored does not need to store a large number of MSS chunks, so that the influence of storing a large number of file fragments in the media server on its performance is avoided while reducing the buffer time for playback of the MP4 file.

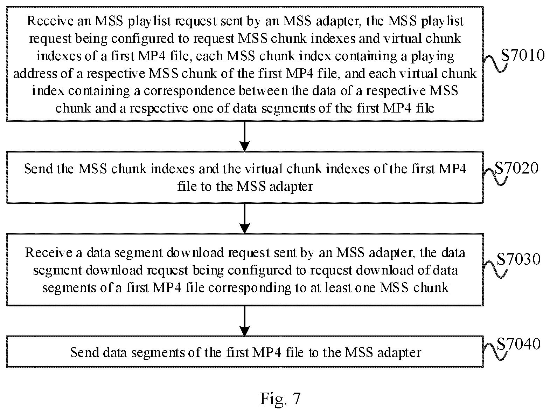

Fig. 7 is a flowchart of another virtual MSS chunking method for an MP4 file provided by an embodiment. As shown in Fig. 7, the method provided by this embodiment includes the following steps.

At S7010, an MSS playlist request sent by an MSS adapter is received, the MSS playlist request being configured to request MSS chunk indexes and virtual chunk indexes of a first MP4 file, where each MSS chunk index contains a playing address of a respective MSS chunk of the first MP4 file, and each virtual chunk index contains a correspondence between the data of a respective MSS chunk and a respective one of data segments of the first MP4 file.

In order to play MSS chunks of the first MP4 file, the MSS player in a terminal device first needs to acquire a first MSS chunk index of the first MP4 file, that is, a playing address of each MSS chunk in the first MP4 file. The MSS chunk indexes are index files required by the MSS player to play the MSS chunks conforming to the MSS protocol. Then, when the MSS player needs to play the MSS chunks of the first MP4 file, it first needs to request the MSS adapter to send the MSS chunk indexes of the first MP4 file. Since the MSS adapter does not store actual media files, which are MP4 files stored in the media server, the MSS adapter needs to send the MSS playlist request to the media server after the MSS player sends the request to the MSS adapter. The MSS playlist request is configured to request the MSS chunk indexes and the virtual chunk indexes of the first MP4 file. In order to enable the first MP4 file stored therein to be played by the MSS player of the terminal device, the media server needs to segment video frames and audio frames in the first MP4 file on the basis of storing the first MP4 file to obtain a plurality of data segments, and each data segment contains at least one video frame and a corresponding audio frame. Corresponding relationships between data in each data segment and MSS chunk data are established, that is, the virtual chunk indexes of the first MP4 file. In the media server, instead of segmenting the first MP4 file into a plurality of actual data segments, the first MP4 file is virtually segmented and the virtual chunk indexes are established. In addition, the media server also establishes the MSS chunk indexes of the first MP4 file, and each MSS chunk index of the first MP4 file contains a playing address of a respective MSS chunk of the first MP4 file. The purpose of the MSS adapter sending the MSS playlist request to the media server is to obtain the MSS chunk indexes and the virtual chunk indexes of the first MP4 file stored in the media server.

In an embodiment, the virtual chunk index contains an actual data position range of the data of the at least one MSS chunk in the first MP4 file. As shown in Fig. 3, instead of actually segmenting the MP4 file, only MSS chunk indexes and virtual chunk indexes related to the MP4 file are generated.

At S7020, the MSS chunk indexes and the virtual chunk indexes of the first MP4 file are sent to the MSS adapter.

According to the MSS playlist request sent by the MSS adapter, the media server finds the MSS chunk indexes and the virtual chunk indexes of the first MP4 file, and then sends them to the MSS adapter. After receiving the MSS chunk indexes and the virtual chunk indexes of the first MP4 file sent by the media server, the MSS adapter stores the virtual chunk indexes and the MSS chunk indexes of the first MP4 file and sends the MSS chunk indexes of the first MP4 file to the MSS player. In this way, the MSS player in the terminal device can obtain the MSS chunk indexes conforming to the MSS protocol, and the MSS player can download and play an MSS chunk to be played according to the obtained MSS chunk indexes. The MSS adapter stores the virtual chunk indexes and the MSS chunk indexes of the first MP4 file. After the playback request sent by the MSS player is received, positions of the MSS chunks that the MSS player requests to play in the first MP4 file can be determined by querying the virtual chunk indexes of the first MP4 file, and then the media server that stores the first MP4 file is requested to download corresponding video frames and audio frames in the first MP4 file, which are then assembled into the MSS chunk in the MSS adapter and sent to the MSS player, so as to realize the normal playing of the MSS player.

At S7030, a data segment download request sent by an MSS adapter is received, where the data segment download request is configured to request download of data segments of a first MP4 file corresponding to at least one MSS chunk.

At S7040, data segments of the first MP4 file are sent to the MSS adapter.

Steps S7030-S7040 are performed in the same way as steps S6010-S6020, so they will not be repeated here.

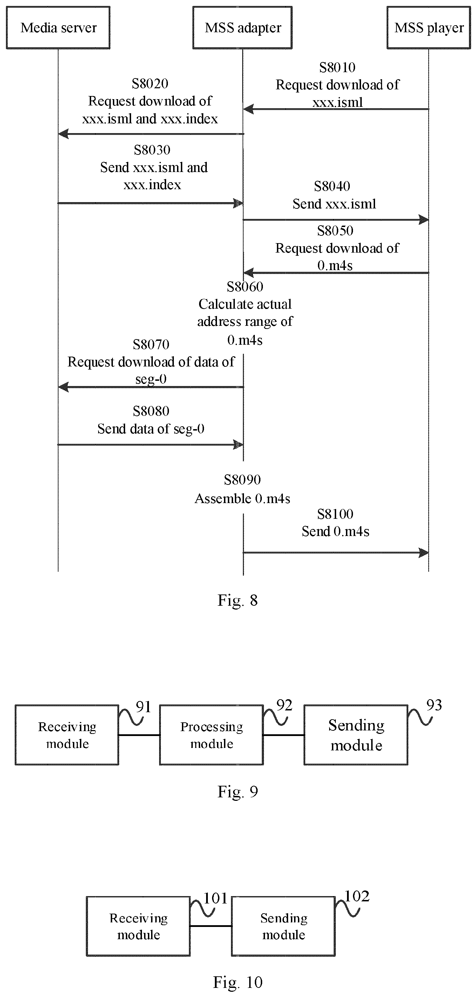

Fig. 8 is an interactive flowchart of another virtual MSS chunking method for an MP4 file provided by an embodiment. As shown in Fig. 8, the method provided by this embodiment includes the following steps.

At S8010, an MSS player requests an MSS adapter to download an xxx.isml file.

At S8020, the MSS adapter requests a media server to download an xxx.isml file and an xxx.index file.

At S8030, the media server sends the xxx.isml file and the xxx.index file to the MSS adapter.

At S8040, the MSS adapter sends the xxx.isml file to the MSS player.

At S8050, the MSS player sends a 0.m4s download request to the MSS adapter.

At S8060, the MSS adapter calculates an actual address range of a segment seg-0 corresponding to 0.m4s in the MP4 file according to the xxx.isml file and the xxx.index file.

At S8070, the MSS adapter requests the media server to download data within the determined actual address range, that is, audio frame and video frame data corresponding to seg-0.

At S8080, the media server sends content corresponding to seg-0 in the MP4 file to the MSS adapter.

At S8090, the MSS adapter parses the received audio frame and video frame data and assembles them into a 0.m4s chunk.

At S8100, the MSS adapter sends the 0.m4s chunk to the MSS player.

The interactive flowchart provided by this embodiment shows the whole process of the MSS player playing the MP4 file stored in the media server through the MSS adapter, the MP4 file is stored in the media server, and the xxx.isml and xxx.index files as shown in Fig. 3 are generated.

Fig. 9 is a schematic diagram of a virtual MSS chunking apparatus for an MP4 file provided by an embodiment. As shown in Fig. 9, the virtual MSS chunking apparatus for the MP4 file provided by this embodiment includes: a receiving module 91 configured to receive an MSS download request sent by an MSS player, the MSS download request being configured to request download of at least one MSS chunk of a first MP4 file; a processing module 92 configured to determine, according to MSS chunk indexes and virtual chunk indexes of the first MP4 file, data segments in the first MP4 file corresponding to data of the at least one MSS chunk, each MSS chunk index containing a playing address of a respective MSS chunk of the first MP4 file, and each virtual chunk index containing a correspondence between the data of a respective MSS chunk and a respective one of data segments of the first MP4 file; a sending module 93 configured to send a data segment download request to a media server, the data segment download request being configured to request download of the data segments of the first MP4 file corresponding to the at least one MSS chunk; where the receiving module 91 is further configured to receive the data segments of the first MP4 file sent by the media server; the processing module 92 is further configured to assemble contents of the data segments to generate the at least one MSS chunk; and the sending module 93 is further configured to send the at least one MSS chunk to the MSS player.

The virtual MSS chunking apparatus for the MP4 file provided in this embodiment is arranged in an MSS adapter, and is used for realizing the virtual MSS chunking method for a MP4 file in the embodiment shown in Fig. 2. The implementation principle and technical effect of the virtual MSS chunking apparatus for the MP4 file provided in this embodiment are similar, which will not be repeated here.

Fig. 10 is a schematic diagram of a virtual MSS chunking apparatus for an MP4 file provided by an embodiment. As shown in Fig. 10, the virtual MSS chunking apparatus for the MP4 file provided by this embodiment includes: a receiving module 101 configured to receive a data segment download request sent by an MSS adapter, the data segment download request being configured to request download of data segments of a first MP4 file corresponding to at least one MSS chunk; and a sending module 102 configured to send the data segments of the first MP4 file to the MSS adapter.

The virtual MSS chunking apparatus for the MP4 file provided in this embodiment is arranged in a media server, and is used for realizing the virtual MSS chunking method for a MP4 file in the embodiment shown in Fig. 6. The implementation principle and technical effect of the virtual MSS chunking apparatus for the MP4 file provided in this embodiment are similar, which will not be repeated here.

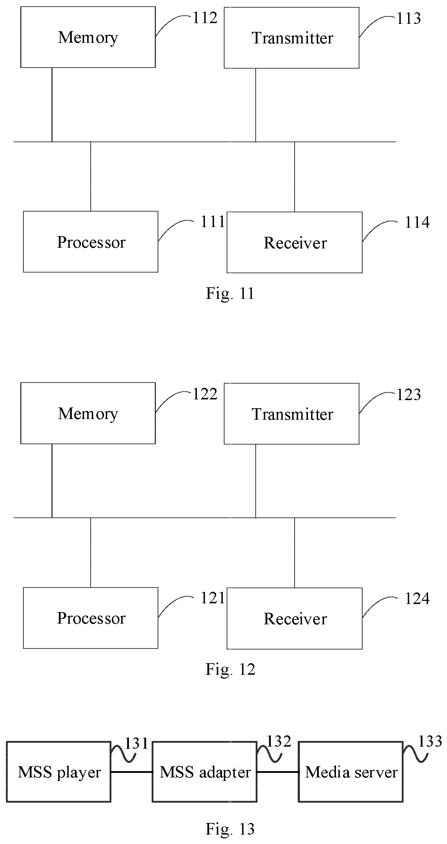

Fig. 11 is a schematic diagram of an MSS adapter provided by an embodiment. As shown in Fig. 11, the MSS adapter includes a processor 111, a memory 112, a transmitter 113 and a receiver 114. The number of processors 111 in the MSS adapter may be one or more, and one processor 111 is shown as an example in Fig. 11. The processor 111, the memory 112, the transmitter 113 and the receiver 114 in the MSS adapter can be connected by a bus or other ways. Bus connection is shown in Fig. 11.

The memory 112, as a computer-readable storage medium, can be configured to store software programs, computer-executable programs and modules, such as program instructions/modules corresponding to the virtual MSS chunking method for a MP4 file in the embodiments of Figs. 2-5 in the present disclosure (for example, the receiving module 91, the processing module 92 and the sending module 93 in the virtual MSS chunking apparatus for the MP4 file). By executing the software programs, instructions and modules stored in the memory 112, the processor 111 completes at least one functional application and data processing of the MSS adapter, that is, implements the above virtual MSS chunking method for a MP4 file.

In an implementation, the memory 112 include a storage program area and a storage data area, where the storage program area may store an operating system and application program(s) required by at least one function, and the storage data area may store data created according to the use of the MSS adapter, etc. In addition, the memory 112 may include a high-speed random access memory and a non-volatile memory, for example, at least one magnetic disk storage device, a flash memory device, or another non-volatile solid-state storage device.

The transmitter 113 is a combination of modules or devices capable of transmitting data to the MSS player or media server in the terminal device through any kind of wired or wireless network. The receiver 114 is a combination of modules or devices that receive data sent by the MSS player or media server in the terminal device through any kind of wired or wireless network.

Fig. 12 is a schematic diagram of a media server provided by an embodiment. As shown in Fig. 12, the media server includes a processor 121, a memory 122, a transmitter 123 and a receiver 124. The number of processors 121 in the media server may be one or more, and one processor 121 is shown as an example in Fig. 12. The processor 121, the memory 122, the transmitter 123 and the receiver 124 in the media server can be connected by a bus or other ways. Bus connection is shown in Fig. 12.

The memory 122, as a computer-readable storage medium, can be configured to store software programs, computer-executable programs and modules, such as program instructions/modules corresponding to the virtual MSS chunking method for a MP4 file in the embodiments of Figs. 6-7 in the present disclosure (for example, the receiving module 101 and the sending module 102 in the virtual MSS chunking apparatus for the MP4 file). By executing the software programs, instructions and modules stored in the memory 122, the processor 121 completes at least one functional application and data processing of the media server, that is, implements the above virtual MSS chunking method for a MP4 file.

In an implementation, the memory 122 include a storage program area and a storage data area, where the storage program area may store an operating system and application program(s) required by at least one function, and the storage data area may store data created according to the use of the media server, etc. In addition, the memory 122 may include a high-speed random access memory and a non-volatile memory, for example, at least one magnetic disk storage device, a flash memory device, or another non-volatile solid-state storage device.

The transmitter 123 is a combination of modules or devices capable of transmitting data to the MSS player or media server in the terminal device through any kind of wired or wireless network. The receiver 124 is a combination of modules or devices that receive data sent by the MSS player or media server in the terminal device through any kind of wired or wireless network.

Fig. 13 is a schematic diagram of an MSS chunking system for an MP4 file provided by an embodiment. As shown in Fig. 13, the MSS chunking system for the MP4 file includes an MSS player 131, an MSS adapter 132 and a media server 133. The MSS player 131 is arranged in a terminal device, and the terminal device may be, for example, a mobile phone, a tablet computer, a desktop computer, a set-top box and other terminal devices that support media access and play. The MSS adapter 132 may be provided in the terminal device or in the media server 133. The media server 133 is a server for storing media files, which may be provided in the cloud or in the same local area network as the terminal device.

A further embodiment of the present disclosure provides a computer-readable storage medium containing computer-executable instructions, which, when executed by a computer processor, cause the processor to perform a virtual MSS chunking method for an MP4 file, and the method includes: receiving an MSS download request sent by an MSS player, the MSS download request being configured to request download of at least one MSS chunk of a first MP4 file; determining, according to MSS chunk indexes and virtual chunk indexes of the first MP4 file, data segments in the first MP4 file corresponding to data of the at least one MSS chunk, each MSS chunk index containing a playing address of a respective MSS chunk of the first MP4 file, and each virtual chunk index containing a correspondence between the data of a respective MSS chunk and a respective one of data segments of the first MP4 file; sending a data segment download request to a media server and receiving data segments of the first MP4 file sent by the media server, the data segment download request being configured to request download of the data segments of the first MP4 file corresponding to the at least one MSS chunk; and assembling contents of the data segments to generate the at least one MSS chunk and sending the at least one MSS chunk to the MSS player.

A further embodiment of the present disclosure provides a computer-readable storage medium containing computer-executable instructions, which, when executed by a computer processor, cause the computer processor to implement a virtual MSS chunking method for an MP4 file, and the method includes: receiving a data segment download request sent by an MSS adapter, the data segment download request being configured to request download of data segments of a first MP4 file corresponding to at least one MSS chunk; and sending data segments of the first MP4 file to the MSS adapter.

The virtual MSS chunking method for a MP4 file, the MSS adapter, the media server and the computer-readable storage medium provided by the embodiments of the present disclosure can not only reduce the buffer time for MP4 file playing, but also avoid the influence of a large number of file fragments stored in the media server on performance.

The above embodiments are only some of the embodiments of the present disclosure, and are not intended to limit the scope of protection of the present disclosure.

Those having ordinary skill in the art should understand that the term "user terminal" covers any suitable type of wireless user equipment, such as mobile phones, portable data processing equipment, portable web browsers or vehicle-mounted mobile stations.

Generally speaking, various embodiments of the present disclosure can be implemented in hardware or dedicated circuits, software, logic or any combination thereof. For example, some aspects can be implemented in hardware, while other aspects can be implemented in firmware or software that can be executed by a controller, a microprocessor or another computing device. However, the present disclosure is not limited thereto.

Embodiments of the present disclosure can be implemented by a data processor of a mobile device executing computer program instructions, for example, in a processor entity, or by hardware, or by a combination of software and hardware. The computer program instructions may be assembly instructions, Instruction Set Architecture (ISA) instructions, machine instructions, machine-related instructions, microcode, firmware instructions, state setting data or source code or object code written in any combination of one or more programming languages.

The block diagram of any logic process in the drawings of the present disclosure can represent program steps, or can represent interconnected logic circuits, modules and functions, or can represent a combination of program steps and logic circuits, modules and functions. The computer program may be stored in a memory. The memory may be of any type that is suitable for a local technical environment and can be implemented using any suitable data storage technology, for example but not limited to, a read-only memory (ROM), a random-access memory (RAM), optical storage devices and systems (a digital versatile disk (DVD) or a compact disk (CD)). The computer-readable medium may include a non-transitory computer-readable storage medium. The data processor may be any type suitable for the local technical environment, for example but not limited to, a general-purpose computer, a special-purpose computer, a microprocessor, a digital signal processor (DSP), an application-specific integrated circuit (ASIC), a field-programmable gate array (FPGA) and a processor based on a multi-core processor architecture.

## Claims

1. A virtual Microsoft Smooth Streaming, MSS, chunking method for an MP4 file, comprising:
receiving an MSS download request sent by an MSS player, the MSS download request being configured to request download of at least one MSS chunk of a first MP4 file (S2010);
determining, according to MSS chunk indexes and virtual chunk indexes of the first MP4 file, data segments in the first MP4 file corresponding to data of the at least one MSS chunk, each MSS chunk index containing a playing address of a respective MSS chunk of the first MP4 file, and each virtual chunk index containing a correspondence between the data of a respective MSS chunk and a respective one of data segments of the first MP4 file (S2020);
sending a data segment download request to a media server and receiving data segments of the first MP4 file sent by the media server, the data segment download request being configured to request download of the data segments of the first MP4 file corresponding to the at least one MSS chunk (S2030); and
assembling contents of the data segments to generate the at least one MSS chunk and sending the at least one MSS chunk to the MSS player (S2040);
**characterized in that**,
before receiving an MSS download request sent by an MSS player, further comprising:
receiving a first MSS playlist request sent by the MSS player, the MSS playlist request being configured to request the MSS chunk indexes of the first MP4 file;
sending a second MSS playlist request to the media server, and receiving the MSS chunk indexes and the virtual chunk indexes of the first MP4 file sent by the media server, the second MSS playlist request being configured to request the MSS chunk indexes and the virtual chunk indexes of the first MP4 file; and
sending the MSS chunk indexes of the first MP4 file to the MSS player.

2. The method of claim 1, wherein determining, according to MSS chunk indexes and virtual chunk indexes of the first MP4 file, data segments in the first MP4 file corresponding to data of the at least one MSS chunk comprises:
calculating, according to a virtual chunk index corresponding to an index of the at least one MSS chunk, an actual data position range of the data of the at least one MSS chunk in the first MP4 file.

3. A virtual Microsoft Smooth Streaming, MSS, chunking method for an MP4 file, comprising:
receiving a data segment download request sent by an MSS adapter, the data segment download request being configured to request download of data segments of a first MP4 file corresponding to at least one MSS chunk (S6010); and
sending data segments of the first MP4 file to the MSS adapter (S6020);
**characterized in that**,
receiving an MSS playlist request sent by the MSS adapter, the MSS playlist request being configured to request MSS chunk indexes and virtual chunk indexes of the first MP4 file, each MSS chunk index containing a playing address of a respective MSS chunk of the first MP4 file, and each virtual chunk index containing a correspondence between the data of a respective MSS chunk and a respective one of data segments of the first MP4 file; and
sending the MSS chunk indexes and the virtual chunk indexes of the first MP4 file to the MSS adapter.

4. The method of claim 3, before receiving an MSS playlist request sent by the MSS adapter, further comprising:
parsing index data of the first MP4 file, and determining video key frames in the first MP4 file;
segmenting the first MP4 file into a plurality of data segments with the video key frames in the first MP4 file as boundaries, each data segment containing at least one video key frame;
establishing a correspondence between each data segment of the first MP4 file and data of a respective MSS chunk, and generating the virtual chunk indexes; and
generating the MSS chunk indexes according to data segmentation of the first MP4 file.

5. The method of claim 4, wherein the virtual chunk index contains an actual data position range of the data of the at least one MSS chunk in the first MP4 file.

6. A Microsoft Smooth Streaming, MSS, adapter, comprising a processor (111) and a memory (112), wherein the processor (111) is configured to execute program instructions stored in the memory (112) to implement the virtual MSS chunking method for a MP4 file of any one of claims 1 to 2.

7. A media server, comprising a processor (121) and a memory (122), wherein the processor (121) is configured to execute program instructions stored in the memory (122) to implement the virtual MSS chunking method for the MP4 file of any one of claims 3 to 5.

8. A computer-readable storage medium storing a computer program which, when executed by a processor, cause the processor to implement the virtual MSS chunking method for a MP4 file of any one of claims 1 to 5.

## Patentansprüche

1. Virtuelles Microsoft Smooth Streaming-, MSS-, Chunkingverfahren für eine MP4-Datei, umfassend:
Empfangen einer MSS-Herunterladeanforderung, die von einem MSS-Player gesendet wurde, wobei die MSS-Herunterladeanforderung dazu konfiguriert ist, das Herunterladen mindestens eines MSS-Chunks einer ersten MP4-Datei anzufordern (S2010);
Bestimmen, gemäß MSS-Chunk-Indizes und virtuellen Chunk-Indizes der ersten MP4-Datei, von Datensegmenten in der ersten MP4-Datei, die Daten des mindestens einen MSS-Chunks entsprechen, wobei jeder MSS-Chunk-Index eine Abspieladresse eines jeweiligen MSS-Chunks der ersten MP4-Datei aufweist und jeder virtuelle Chunk-Index eine Entsprechung zwischen den Daten eines jeweiligen MSS-Chunks und einem jeweiligen Datensegment der ersten MP4-Datei aufweist (S2020);
Senden einer Datensegment-Herunterladeanforderung an einen Medienserver und Empfangen von Datensegmenten der ersten MP4-Datei, die von dem Medienserver gesendet wurden, wobei die Datensegment-Herunterladeanforderung dazu konfiguriert ist, das Herunterladen der Datensegmente der ersten MP4-Datei anzufordern, die dem mindestens einen MSS-Chunk entsprechen (S2030); und
Zusammensetzen von Inhalten der Datensegmente, um den mindestens einen MSS-Chunk zu erzeugen, und Senden des mindestens einen MSS-Chunks an den MSS-Player (S2040);
**dadurch gekennzeichnet, dass**
vor dem Empfangen einer MSS-Herunterladeanforderung, die von einem MSS-Player gesendet wurde, das Verfahren ferner umfasst:
Empfangen einer ersten MSS-Playlistanforderung, die von dem MSS-Player gesendet wurde, wobei die MSS-Playlistanforderung dazu konfiguriert ist, die MSS-Chunk-Indizes der ersten MP4-Datei anzufordern;
Senden einer zweiten MSS-Playlistanforderung an den Medienserver und Empfangen der MSS-Chunk-Indizes und der virtuellen Chunk-Indizes der ersten MP4-Datei, die von dem Medienserver gesendet wurden, wobei die zweite MSS-Playlistanforderung dazu konfiguriert ist, die MSS-Chunk-Indizes und die virtuellen Chunk-Indizes der ersten MP4-Datei anzufordern; und
Senden der MSS-Chunk-Indizes der ersten MP4-Datei an den MSS-Player.

2. Verfahren nach Anspruch 1, wobei das Bestimmen, gemäß MSS-Chunk-Indizes und virtuellen Chunk-Indizes der ersten MP4-Datei, von Datensegmenten in der ersten MP4-Datei, die Daten des mindestens einen MSS-Chunks entsprechen, umfasst:
Berechnen, gemäß einem virtuellen Chunk-Index, der einem Index des mindestens einen MSS-Chunks entspricht, eines tatsächlichen Datenpositionsbereichs der Daten des mindestens einen MSS-Chunks in der ersten MP4-Datei.

3. Virtuelles Microsoft Smooth Streaming-, MSS-, Chunkingverfahren für eine MP4-Datei, umfassend:
Empfangen einer Datensegment-Herunterladeanforderung, die von einem MSS-Adapter gesendet wurde, wobei die Datensegment-Herunterladeanforderung dazu konfiguriert ist, das Herunterladen von Datensegmenten einer ersten MP4-Datei anzufordern, die mindestens einem MSS-Chunk entsprechen (S6010); und
Senden von Datensegmenten der ersten MP4-Datei an den MSS-Adapter (S6020);
**dadurch gekennzeichnet, dass**
Empfangen einer MSS-Playlistanforderung, die von dem MSS-Adapter gesendet wurde, wobei die MSS-Playlistanforderung dazu konfiguriert ist, MSS-Chunk-Indizes und virtuelle Chunk-Indizes der ersten MP4-Datei anzufordern, wobei jeder MSS-Chunk-Index eine Abspieladresse eines jeweiligen MSS-Chunks der ersten MP4-Datei enthält und jeder virtuelle Chunk-Index eine Entsprechung zwischen den Daten eines jeweiligen MSS-Chunks und einem jeweiligen Datensegment der ersten MP4-Datei enthält; und
Senden der MSS-Chunk-Indizes und der virtuellen Chunk-Indizes der ersten MP4-Datei an den MSS-Adapter.

4. Verfahren nach Anspruch 3, vor dem Empfangen einer MSS-Playlistanforderung, die von dem MSS-Adapter gesendet wurde, ferner umfassend:
Auswerten von Indexdaten der ersten MP4-Datei und Bestimmen von Videokeyframes in der ersten MP4-Datei;
Segmentieren der ersten MP4-Datei in mehrere Datensegmente mit den Videokeyframes in der ersten MP4-Datei als Grenzen, wobei jedes Datensegment mindestens einen Videokeyframe enthält;
Herstellen einer Entsprechung zwischen jedem Datensegment der ersten MP4-Datei und Daten eines jeweiligen MSS-Chunks und Erzeugen der virtuellen Chunk-Indizes; und
Erzeugen der MSS-Chunk-Indizes gemäß der Datensegmentierung der ersten MP4-Datei.

5. Verfahren nach Anspruch 4, wobei der virtuelle Chunk-Index einen tatsächlichen Datenpositionsbereich der Daten des mindestens einen MSS-Chunks in der ersten MP4-Datei aufweist.

6. Microsoft Smooth Streaming-, MSS-, Adapter, umfassend einen Prozessor (111) und einen Speicher (112), wobei der Prozessor (111) dazu konfiguriert ist, Programmanweisungen auszuführen, die in dem Speicher (112) gespeichert sind, um das virtuelle MSS-Chunkingverfahren für eine MP4-Datei nach einem der Ansprüche 1 bis 2 zu implementieren.

7. Medienserver, umfassend einen Prozessor (121) und einen Speicher (122), wobei der Prozessor (121) dazu konfiguriert ist, Programmanweisungen auszuführen, die in dem Speicher (122) gespeichert sind, um das virtuelle MSS-Chunkingverfahren für die MP4-Datei nach einem der Ansprüche 3 bis 5 zu implementieren.

8. Computerlesbares Speichermedium, das ein Computerprogramm speichert, das, wenn es von einem Prozessor ausgeführt wird, den Prozessor veranlasst, das virtuelle MSS-Chunkingverfahren für eine MP4-Datei nach einem der Ansprüche 1 bis 5 zu implementieren.

## Revendications

1. Procédé de fragmentation virtuelle Microsoft Smooth streaming, MSS, pour un fichier MP4, comprenant :
la réception d'une demande de téléchargement MSS envoyée par un lecteur MSS, la demande de téléchargement MSS étant configurée pour demander le téléchargement d'au moins un fragment MSS d'un premier fichier MP4 (S2010) ;
la détermination, selon des indices de fragments MSS et des indices de fragments virtuels du premier fichier MP4, de segments de données du premier fichier MP4 correspondant à des données du ou des fragments MSS, chaque indice de fragment MSS contenant une adresse de lecture d'un fragment MSS respectif du premier fichier MP4, et chaque indice de fragment virtuel contenant une correspondance entre les données d'un fragment MSS respectif et un segment respectif parmi des segments de données du premier fichier MP4 (S2020) ;
l'envoi d'une demande de téléchargement de segments de données à un serveur de média et la réception de segments de données du premier fichier MP4 envoyés par le serveur de média, la demande de téléchargement de segments de données étant configurée pour demander un téléchargement des segments de données du premier fichier MP4 correspondant au(x) fragment(s) MSS (S2030) ; et
l'assemblage du contenu des segments de données pour générer le ou les fragments MSS et l'envoi du ou des fragments MSS au lecteur MSS (S2040) ;
**caractérisé en ce que**
avant la réception d'une demande de téléchargement MSS envoyée par un lecteur MSS, il comprend en outre :
la réception d'une première demande de liste de lecture MSS envoyée par le lecteur MSS, la demande de liste de lecture MSS étant configurée pour demander les indices de fragments MSS du premier fichier MP4 ;
l'envoi d'une seconde demande de liste de lecture MSS au serveur de média, et la réception des indices de fragments MSS et des indices de fragments virtuels du premier fichier MP4 envoyés par le serveur de média, la seconde demande de liste de lecture MSS étant configurée pour demander les indices de fragments MSS et les indices de fragments virtuels du premier fichier MP4 ; et
l'envoi des indices de fragments MSS du premier fichier MP4 au lecteur MSS.

2. Procédé selon la revendication 1, la détermination, selon des indices de fragments MSS et des indices de fragments virtuels du premier fichier MP4, de segments de données dans le premier fichier MP4 correspondant à des données du ou des fragments MSS comprenant :
le calcul, en fonction d'un indice de fragment virtuel correspondant à un indice du ou des fragments MSS, d'une plage de position réelle des données du ou des fragments MSS dans le premier fichier MP4.

3. Procédé de fragmentation virtuelle Microsoft Smooth streaming, MSS, pour un fichier MP4, comprenant :
la réception d'une demande de téléchargement de segments de données émise par un adaptateur MSS, la demande de téléchargement de segments de données étant configurée pour demander un téléchargement de segments de données d'un premier fichier MP4 correspondant à au moins un fragment MSS (S6010) ; et
l'envoi de segments de données du premier fichier MP4 à l'adaptateur MSS (S6020) ;
**caractérisé en ce que**
la réception d'une demande de liste de lecture MSS envoyée par l'adaptateur MSS, la demande de liste de lecture MSS étant configurée pour demander des indices de fragments MSS et des indices de fragments virtuels du premier fichier MP4, chaque indice de fragment MSS contenant une adresse de lecture d'un fragment MSS respectif du premier fichier MP4, et chaque indice de fragment virtuel contenant une correspondance entre les données d'un fragment MSS respectif et un un segment respectif parmi des segments de données du premier fichier MP4 ; et
l'envoi des indices de fragments MSS et des indices de fragments virtuels du premier fichier MP4 à l'adaptateur MSS.

4. Procédé selon la revendication 3, comprenant en outre, avant la réception d'une demande de liste de lecture MSS envoyée par l'adaptateur MSS :
l'analyse de données d'indices du premier fichier MP4, et la détermination d'images-clés de vidéo dans le premier fichier MP4 ;
la segmentation du premier fichier MP4 en une pluralité de segments de données avec les images-clés de vidéo dans le premier fichier MP4 en tant que limites, chaque segment de données contenant au moins une image-clé de vidéo ;
l'établissement d'une correspondance entre chaque segment de données du premier fichier MP4 et des données d'un fragment MSS respectif, et la génération des indices de fragments virtuels ; et
la génération des indices de fragments MSS en fonction de la segmentation des données du premier fichier MP4.

5. Procédé selon la revendication 4, l'indice de fragment virtuel contenant une plage de positions de données réelles des données du ou des fragments MSS dans le premier fichier MP4.

6. Adaptateur Microsoft Smooth Streaming, MSS, comprenant un processeur (111) et une mémoire (112), le processeur (111) étant configuré pour exécuter des instructions de programme stockées dans la mémoire (112) pour mettre en œuvre le procédé de fragmentation virtuelle MSS pour un fichier MP4 selon l'une quelconque des revendications 1 à 2.

7. Serveur de média, comprenant un processeur (121) et une mémoire (122), le processeur (121) étant configuré pour exécuter des instructions de programme stockées dans la mémoire (122) pour mettre en œuvre le procédé de fragmentation virtuelle MSS pour le fichier MP4 selon l'une quelconque des revendications 3 à 5.

8. Support de stockage lisible par ordinateur stockant un programme informatique qui, lorsqu'il est exécuté par un processeur, amène le processeur à mettre en œuvre le procédé de fragmentation virtuelle MSS pour un fichier MP4 selon l'une quelconque des revendications 1 à 5.
